# EUROPEAN PATENT SPECIFICATION

(11) **EP 0 138 147 B1**
(45) Date of publication and mention of the grant of the patent: **14.04.1993**
(21) Application number: 84111780.7
(22) Date of filing: 03.10.1984
(51) Int. Cl.: A61J 1/00, A61M 5/14

(54) **Citrate-ester plasticized PVC blood containers**
Durch Citrat-Ester plastifizierter PVC-Blutbehälter
Poche à sang en PVC plastifiée par un ester de citrate

(30) Priority: 14.10.1983 US 542303
(43) Date of publication of application: 24.04.1985
(73) Proprietor: Bayer Corporation, Pittsburgh, PA 15219-2502 (US)
(72) Inventor: Mahal, Mohan Singh, Pleasant Hill California 94523 (US)
(74) Representative: Burkert, Frank

(56) References cited:
- US-A- 4 222 379
- US-A- 4 280 497
- CHEMICAL ABSTRACTS, vol. 101, no. 10, 3rd - 17th September 1984, page 377, column 2, abstract no. 78806r, Columbus, Ohio, US; E.H. HULL et al.: "Citric acid esters as plasticizers for medical-grade PVC", & MOD. PLAST. 1984, 61 (5), 66-68,70
- CHEMICAL ABSTRACTS, vol. 96, no. 2, 4th - 18th January 1982, page 31, column 2, page 32, column 1, abstract no. 7480x, Columbus, Ohio, US; J. SOJKA et al.: "Preparation and properties of citric acid esters as plasticizing agents for PVC", & CHEM. PRUM. 1981, 31(9), 480-484

## Description

### Background of the Invention

Field of the Invention: This disclosure relates generally to blood containers and to multiple blood bag systems for collecting, processing and storage of blood and blood components and specifically with a novel plastic film for the manufacture of such containers and systems.

Description of the Prior Art: For years, blood has been collected and processed into various components such as packed red cells, plasma, platelets and cryoprecipitate using systems comprising a single plastic bag or, more commonly, two or more plastic bags interconnected by tubing. The blood is first collected from a donor into a primary or donor bag to which is typically connected to one or more secondary or satellite bags. Both the donor and satellite bags have been routinely made of polyvinyl chloride (PVC) film containing as plasticizer di-2-ethylhexyl phthalate (DEHP).

For some time, however, it has been known that considerable amounts of DEHP are leached from the walls of the blood bags by the plasma in the blood when blood or packed red cells are stored for periods of time. There has been concern over the potentially harmful effects of DEHP on patients repeatedly infused with blood or blood components stored in such blood bags.

Consequently, numerous attempts have been made, to find an acceptable material for blood bags which would have all desirable features of existing bags, be steam sterilizable and yet free of DEHP. Such formulations should also have properties which are not detrimental to the components of blood; for example, the material should not cause undue hemolysis of red cells or decrease the viability of platelets upon storage to levels which would be clinically unacceptable.

It has been known for some time that commercially available blood bags, which were made of PVC plasticised with DEHP, were generally better than glass containers for the long term storage of blood. Hemolysis in such bags was less and post transfusion survival of the red cells was improved for blood stored in these plastic bags. This inherent property of PVC bags plasticized with DEHP has contributed to this being until recently the only material for blood bags which was and still is acceptable and approved by Government regulatory agencies for storage of red blood cells. It has been theorized that this condition of decreased hemolysis of red cells is attributable to the DEHP (or other extractable plasticizers such as dioctyl adipate) which is extracted from the bag by the blood and that the DEHP inhibits hemolysis (see, for example, U.S. Patent No. 4,222,379, hereinafter '379). The exact mechanism by which hemolysis is decreased is not fully understood and, to date, DEHP is the main substance thought to have such a hemolysis-inhibiting effect.

It has been found recently that the rationale for using DEHP-plasticized PVC for red blood cell storage bags (primary bags) does not necessarily apply to bags (satellite or secondary bags) that are used primarily for storage of blood platelets. Platelet concentrates are routinely obtained by well established procedures from blood plasma and have been stored (until recently) in medical grade polyvinyl chloride (DEHP-plasticized PVC) bags at about 22° C prior to use. Platelet concentrates, however, contain dextrose derived from the buffered anticoagulants such as ACD (acid citrate-dextrose) or CPD (citrate-phosphate-dextrose) used in whole blood collection and storage. During storage, the platelets convert this dextrose to lactic acid and carbon dioxide (CO₂) which lowers the pH. Measured CO₂ and oxygen pressures in various PVC and polyethylene (PE) bags containing platelet concentrates indicate that the drop in pH was greater the thicker the walls of the bag. Since oxygen is known to suppress conversion of dextrose to lactic acid, it has been concluded that the efficiency of oxygen transport into and CO₂ transport from the bags was dependent upon the thickness of the bag walls. For a given platelet count, the pH drop of stored concentrates is significantly less for thin walled containers. Concentrates with high platelet counts (2 x 10⁶/mm³ and greater) stored in standard PVC bags whose walls were considerably thicker had a pH of around 6.0 or lower after three days storage. It has also been known that an abrupt loss of in vivo viability occurs if pH falls below 6.0 during storage.

Unfortunately, thicker-walled bags are necessary in the process of obtaining platelet concentrates since the bags are subjected to high speed centrifugation and must be resistant to rupturing, especially at very low temperatures. To achieve the degree of flexibility needed for standard PVC bags, manufactures have commonly used DEHP plasticizer. In the past there has been concern over the possibility of harmful effects on platelets of DEHP which leaches into platelet concentrates stored in standard PVC containers. Polyolefins such as polyethylene (PE) do not require such plasticizers, and, accordingly, have been used for platelet bags. However, polyolefins are not a suitable material for bags in which to collect platelet concentrates any more than thin-walled PVC bags since they are highly susceptible to rupturing during pressure steam sterilization, at low temperatures and/or centrifugation.

It would therefore be highly desirable to be able to store platelets in a plastic container having sufficient tensile strength to withstand pressure sterilization, low temperatures and high speed contrifugation while at the same time having good carbon dioxide and oxygen permeability characteristics so as to prolong platelet survival. It is a particular advantage to prolong platelet survival beyond a three day survival period, preferably beyond five days.

The Czechoslowakian publication J. Soyke et al: "Preparation and properties of citric acid esters as plasticizing agents for PVC" (Engl. translation), CHEM. PRUM. 1981, 31 (9), 480-484 describes PVC container plasticized with citrate acid esters, but without any relation to blood bag systems.

Recently, in U.S. Patent No. 4,280,497 ('497), which corresponds to the preamble of Claim 1, there was disclosed a plastic container which withstands rupturing during pressure heat sterilization and high-speed centrifugation and which had superior characteristics for transmitting carbon dioxide and oxygen. Platelets when stored in such a blood bag maintain acceptable viability for at least five days or longer. This container is composed of PVC film plasticized with Tri-2-ethylhexyltrimellitate (TOTM). The blood bag system taught in the '379 patent, on the other hand, is a donor bag and transfer bag made of plastic materials which are described as comprising different polymer entities. In one example, the donor bag is PVC plasticized with DEHP; and the transfer bag to be used for platelet storage is made from a material which permits relatively high diffusion of carbon dioxide such as the polyolefin-thermoplastic rubber formulation of U.S. Patent No. 4,140,162. Other transfer bags in the above system may be made of a polyester in accordance with the teachings of U.S. Patent No. 4,045,431.

### Summary of the Invention

An improved blood bag system for the preservation of blood and blood components has been devised. A blood bag system according to the present invention is defined by Claim 1. The system may be used in the manufacture of a multiple blood bag systems. As used herein the term blood bag system as applied to this invention, includes any material which contains or controls the flow of blood products such as blood bags, tubing, administration sets and the like.

The material of the invention is PVC plasticized with a special class of citrate plasticizers. The plasticizers disclosed are tri fatty esters of citric acid or acylated citric acid and 4 - 10 carbon straight chain aliphatic alcohols, such as tri-butyl citrate, acetyl Tri-n-hexyl citrate, n-butryl Tri-n-hexyl citrate, acetyl Tri-n-octyl or decyl) citrate. The present material allows storage of red blood cells for a period of at least thirty five days and platelets for a period of at least five days.

One important advantage of the invention is that all components of a blood bag system, i.e., bags, tubing, primary and satellite bags, may be fabricated from the plastic formulations of the invention. Thus, manufacturing problems that are presented in attempting to carry out the teaching of other patents such as '379 are avoided when utilizing the present plastic material. There is no problem with compatibility of plastic film and blood bag system components, which might confront the manufacturer in joining, sealing or otherwise preparing a blood bag system from different polymer entities.

Another advantage of the invention is that blood stored in the present blood bag system for periods of at least thirty five days at standard blood storage temperatures will provide clinically effective levels of unhemolyzed red cells and no harmful effects of DEHP (also known as DOP).

In addition, the blood bags of the blood bag system according to the invention exhibit a relatively high carbon dioxide and oxygen transmissibility, due to the nature and total amount of plasticizer so that platelets stored therein at standard platelet storage conditions remain clinically viable. The citrate-ester plasticizers of the present invention may comprise the total plasticizer or be part of a blend of plasticizers in a PVC material.

### Brief Description of the Drawings

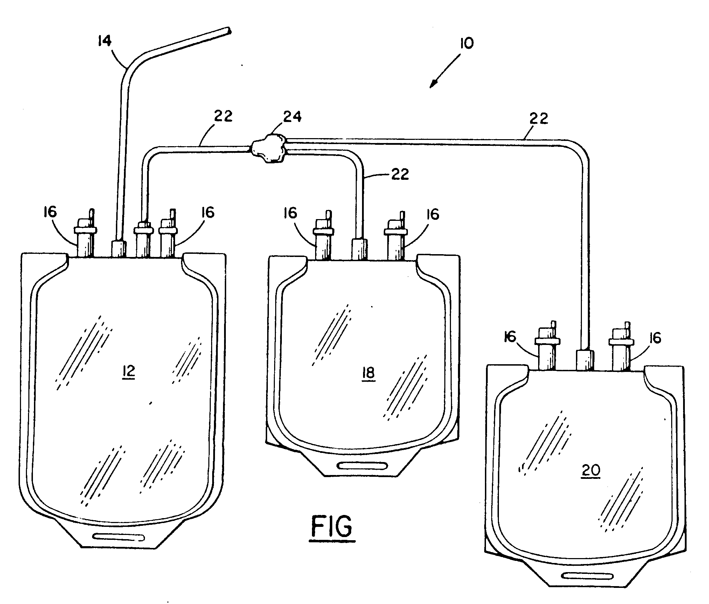

The Figure is a plan view of a multiple blood bag system in accordance with the invention.

### Description of the Preferred Embodiments

The invention, which may be better understood by reference to the drawing of the Figure, comprises a multiple blood bag system 10 having a donor bag 12 joined to one or more satellite bags, in this case two satellite bags 18 and 20, by flexible tubing 22 and a Y-connector 24. The donor and satellite bags may have one or more access ports 16 and donor bag 12 is equipped with a blood collection tube 14 leading to a donor needle (not shown). Fluid flow through tubing 22 from bag 12 is controlled by any conventional valving means located, for example, within tubing 22.

The donor bag 12 as well as satellite bags 18 and 20 and the flexible tubing 22 may be of a polymeric substance comprising polyvinylchloride (PVC) plasticized with the citrate-ester plasticizer. Alternatively, any flexible polymer, such as polyethylene, could be used in the tubing. The amount of citrate-ester plasticizer is sufficient, preferably, to allow storage of red blood cells in the blood bags for a period of at least thirty five days, with a reduced level of hemolysis when compared to blood stored in blood bags plasticized with a blood-extractable or non-extractable plasticizer; and the total amount of plasticizer is sufficient to enhance the gas permeability of the plastic formulation to allow storage of platelets therein at a pH of at least 6, preferably 7 for a period of, preferably, at least five days. Usually, this amount of plasticizer is sufficient to yield a carbon dioxide transmissibility rate of at least about 0.9 micromoles per hour per cm².

The total plasticizer in the PVC is about 20% (for minimum flexibility) to 60% (to avoid exudation, maintain flexibility, and for economy), preferably 35 - 50%, based on the weight of polymeric substance. As mentioned above, the citrate-ester plasticizer may be part of a blend of plasticizers formulated to achieve certain properties.

The plastic blood bags of the blood bag system according to the invention may be a bag whose walls are composed of PVC film plasticized with the afore-mentioned plasticizers and preferably which further may contain about 3 to 35, preferably 3 - 15 weight percent of epoxidized soy bean oil and/or epoxidized linseed oil (for heat stability). Although not critical, the bag preferably also includes small amounts, i.e., less than one percent, preferably about 0.60 percent, of a metal soap such as zinc stearate, calcium stearate or the like also for heat stability. Very small amounts of a processing aid such as mineral oil or Acrawax-C may be included, i.e., less than one percent.

The wall thickness of the blood bags may be in the range of 0,13-0,63 mm (0,005 to 0,025 inch) preferably about 0,30 - 0,45 mm (0,012 to 0,018 inch) to provide blood bags having sufficient tensile strength to withstand high pressures generated in their use. Film sheets with which to make bags are obtained by methods well established in the industry.

As an example of how the multiple blood bag system of my invention is used, blood is collected from a donor into the donor bag of the type specifically described above which may contain an anticoagulant solution such as, for example, acid-citrate-dextrose (ACD), USP XX, page 49, citrate-phosphate-dextrose (CPD), USP XX, pages 49 - 50, CP2D, Lovric et al, Med. J. Aust., 1977, 2, 183 - 186, CPD plus adenine (CPDA-1), Zuck et al, Transfusion, 17, 374 - 382, 1977. Following centrifugation, the valving means is actuated and the plasma is expressed into one of the satellite bags (of the type described above) where it is further centrifuged at an appropriate speed to cause the platelets to separate from the plasma. The platelet poor plasma is expressed into the second satellite bag and the platelets in about 50 ml of plasma are gently agitated for gas exchange in the first satellite bag. After at least five days the amount of the viable platelets remaining is as good or better as that for platelets stored for the same period of time in TOTM plasticized PVC bags of the type described in U.S. Patent No. 4,280,497.

The multiple blood bag system of the invention may contain additional bags made of the polymeric substance of this invention. One of those bags may contain a preservative solution for red cell concentrates. These preservative solutions may include, for instance, saline-adenine-glucose (SAG), Hagman et al), The New England Journal of Medicine, 299, 1337 - 1382 (1978) or SAG plus mannitol, U.S. Patent No. 4,267,269, Ginzburg, Bibl. Haemat., 1971, No. 38, part Ii, 217 - 220 and Wood et al, Blood, 42, 17 - 25 (1973). In use, after plasma and platelets have been separated from the red cells as described above, the preservative solution in the satellite or third bag is expressed into the bag containing the red cell concentrate (donor bag 12 in the Figure). The red cell concentrate is mixed with the preservative solution and stored under conventional conditions until used. A further demonstration of the invention is illustrated in the examples which follow.

### Example 1

The Figure illustrates a blood bag system in accordance with this invention. In this particular embodiment the bags are formed from a film sheet folded at the top and heat sealed around three edges to provide the two walls of the bag. In a typical blood bag, the internal surface area is at least about 312,5 cm² (50 in²). The satellite bags are provided with an inlet which is connected by tubing to the donor primary bag used for collecting whole blood. The satellite bags also have one or more access ports closed by suitable caps.

In this Example, the film from which the above bags were made contains in 100 parts of PVC resin, 65 parts of n-Butyryl Tri-n-hexyl citrate (B-6 citrate plasticizer made by Pfizer Inc.), 5 parts of ESO, 1.0 parts Ca-Zn stearate stabilizer (Ferro 760X), and 0.5 PHR of mineral oil. The above ingredients were ribbon blended and then extruded in laboratory size extruder into a 15 mils thick film.

Steam sterilized bags described above, and similarly prepared standard reference DEHP plasticized PVC bags were studied for their effect on red cell hemolysis and osmotic fragility. Results are shown in Table 1.

**Table 1**

| Data After Five Weeks Storage of Whole Blood at 4° C | | | |
|---|---|---|---|
| Donor Number | Formulation | (10% Lysis) Osmotic Fragility | Percent Hemolysis |
| 1 | PVC-DEHP | 0.695 | 0.64 |
| | PVC-Citrate (ester) | 0.687 | 0.61 |
| 2 | PVC-DEHP | 0.623 | 0.50 |
| | PVC-Citrate (ester) | 0.617 | 0.56 |
| 3 | PVC-DEHP | 0.661 | 0.98 |
| | PVC-Citrate (ester) | 0.657 | 0.84 |

The citrate-ester (B-6) plasticized PVC performs at least as well or better as DEHP plasticized PVC preventing hemolysis of red blood cells.

### Example 2

An oxygen transmission study was carried out using a blood bag described in example 1 made from the citrate-ester plasticized PVC. This time TOTM plasticized bags as described in U.S. Patent No. 4,280,497 and similarly prepared were used as a control.

**Table 2**

| Test Results | | |
|---|---|---|
| Test | Standard TOTM-PVC Blood Bag | Citrate-Ester PVC Blood Bag |
| O₂ gain µ-moles/hr/bag | 8.9 | 20.0 |
| Thickness, mils(n=10) | 15.4 ± 0.3 | 16.6 ± 0.3 |
| Area cm²(n=10) | 300 ± 1 | 299 ± 2 |
| Plasticizer, weight % (actually tested) | 38.9 | 41.8 |

From the above, it can be seen that the PVC formulation plasticized with the B-6 citrate-ester provides higher O₂ gain (> 10 µ/moles/hr.) than the TOTM blood bag system. This data indicates that significant improvement of the platelet aerobic metabolism can be achieved during long term platelet storage (beyond five days) in a citrate-ester plasticized PVC bag.

### Example 3 (0₂ Permeability vs. pH Change after Five Days)

The 0₂ permeability (µ/moles/day/blood bag) vs. pH change below 6.0 after five days of the B-6 citrate-ester plasticized bag of this disclosure was compared with similar measurements of blood bags described in an article in Blood, Vol. 60, No. 1 (July) 1980 and information presented via poster show at the November, 1982 meeting of the Amer. Assoc. of Blood Banking. The results are compared below.

**Table 3**

| Blood Bag Material | 0₂ Permeability (µ/moles/day/bag) | Bags with pH > 6.0 after Five Days Storage |
|---|---|---|
| TOTM-Plasticised PVC (1st generation) | 153 | 74/97 (76%) |
| TOTM-Plasticized PVC (2nd generation) | 228 | 73/75 (97%) |
| Polyolefin (Fenwal PL-732) | 305 | 100% |
| Citrate-Ester Plasticized PVC (present invention) | 480 | ___________ |

As can be seen, the 0₂ permeability of the bag of this invention 57% higher than the best material available to date.

### Example 4 (Low Temperature Studies)

### Low Temperature Brittleness Test (ASTM D 1790)

The above formulation was found to be superior to the DEHP/PVC a DEHP-TOTM blend/PVC and TOTM/PVC films in respect to low temperature breakage. Results of ASTM Testing are listed below.

**Table 4**

| Samples | Results | |
|---|---|---|
| | Pass | Fail |
| TOTM-plasticized PVC Bag | -30°C | -35°C |
| 10% DEHP/TOTM (blended)-PVC Bag | -30°C | -35°C |
| DEHP plasticized PVC Bag (Cutter Donor Bag) | -30°C | -35°C |
| DEHP-plasticized PVC Bag (Fenwal PL 146 Bag) | -30°C | -35°C |
| Citrate-Ester (B-6) Plasticized PVC Bag | -45°C | -50°C |

As can be seen above, only the citrate-ester plasticized PVC film of this invention was able to pass the low temperature brittleness test as low as -45° C.

## Claims

1. A blood bag system comprising a flexible blood bag for blood and blood products, the bag being made of plasticized polyvinyl chloride film and having a wall thickness in the range of 0,13 - 0,63 mm, characterized in that the film comprises, on a weight percent basis, 40 - 80 % polyvinyl chloride and 20 - 60 % citrate ester plasticizer.

2. A blood bag system according to claim 1 comprising a flexible tubing component made from plasticized polyvinyl chloride, characterized in that the plasticizer comprises a citrate ester in an amount of 20 - 60 % based on the weight of the polymeric substance.

3. A blood bag system according to claim 1, characterized in that the plasticizer is a tri-ester of citric acid or acylated citric acid and an alcohol.

4. A blood bag system according to claim 3, characterized in that the alcohol is selected from an aliphatic alcohol having 4 through 10 carbon atoms.

5. A blood bag system according to claim 4, characterized in that the plasticizer is selected from acetyl tri-butyl citrate, n-butyryl tri-n-hexyl citrate, acetyl tri-n-octyl citrate and acetyl tri-n-decyl citrate.

6. A blood bag system according to claim 1, characterized in that the film has an O₂ transmissibility greater than 10 µ/moles/hr and capable of withstanding low temperature breakage at about -45°C.

7. A blood bag system according to any of claims 1 to 6, characterized in that the film comprises 3 to 35 weight percent of soy bean oil and/or epoxidized linseed oil.

8. A blood bag system according to either claim 6 or 7, characterized in that the film comprises up to 1 weight percent of a metal soap.

## Patentansprüche

1. Blutbeutelsystem, umfassend einen flexiblen Blutbeutel für Blut und Blutprodukte, wobei der Blutbeutel hergestellt ist aus einer Ployvinylchloridfolie mit einem Weichmacher und eine Wandstarke im Bereich von 0,13 bis 0,63 mm hat, dadurch **gekennzeichnet,** daß die Folie bezogen auf Gewichtsprozent 40 bis 80 % Polyvinylchlorid und 20 bis 60 % Citratesterweichmacher enthält.

2. Blutbeutelsystem nach Anspruch 1 mit einem flexiblen Schlauchbestandteil, hergestellt aus plastifiziertem Polyvinylchlorid, dadurch **gekennzeichnet,** daß der Weichmacher einen Citratester in einer Menge von 20 bis 60 % bezogen auf das Gewicht der Polymersubstanz enthält.

3. Blutbeutelsystem nach Anspruch 1, dadurch **gekennzeichnet,** daß der Weichmacher ein Triester von Zitronensäure oder acetylierter Zitronensäure mit einem Alkohol ist.

4. Blutbeutelsystem nach Anspruch 3, dadurch **gekennzeichnet,** daß der Alkohol ausgewählt ist aus einem aliphatischen Alkohol mit 4 bis 10 Kohlenstoffatomen.

5. Blutbeutelsystem nach Anspruch 4, dadurch **gekennzeichnet,** daß der Weichmacher ausgewählt ist aus Acetyl-tri-butylcitrat, n-Butyryl-tri-n-hexylcitrat, Acetyl-tri-n-octylcitrat und Acetyl-tri-n-decylcitrat.

6. Blutbeutelsystem nach Anspruch 1, dadurch **gekennzeichnet,** daß der Film eine O₂-Permeabilität größer als 10 µmol/h hat und ein Widerstandsvermögen gegenüber Bruch bei niedrigen Temperaturen bis ca. -45°C aufweist.

7. Blutbeutelsystem nach einem der Ansprüche 1 bis 6, dadurch **gekennzeichnet,** daß der Film 3 bis 35 Gew.% Sojabohnenöl und/oder epoxidiertes Leinsamenöl enthält.

8. Blutbeutelsystem nach Anspruch 6 oder 7, dadurch **gekennzeichnet,** daß der Film bis zu 1 Gew.% einer Metallseife enthält.

## Revendications

1. Système de poches de sang comprenant une poche de sang flexible destinée au sang et aux produits sanguins, la poche étant en un film de polychlorure de vinyle plastifié et ayant une épaisseur de paroi comprise dans la plage de 0,13 à 0,63 mm, caractérisé en ce que le film comprend, sur une base de pourcentage en poids, 40 à 80 % de polychlorure de vinyle et 20 à 60 % d'un plastifiant qui est un citrate (ester).

2. Système de poches de sang selon la revendication 1, comprenant un composant tube souple en polychlorure de vinyle plastifié, caractérisé en ce que le plastifiant comprend un citrate (ester) en une quantité comprise entre 20 et 60 %, par rapport au poids de la substance polymère.

3. Système de poches de sang selon la revendication 1, caractérisé en ce que le plastifiant est un triester d'acide citrique ou d'acide citrique acylé et d'un alcool.

4. Système de poches de sang selon la revendication 3, caractérisé en ce que l'alcool est sélectionné parmi des alcools aliphatiques ayant 4 à 10 atomes de carbone.

5. Système de poches de sang selon la revendication 4, caractérisé en ce que le plastifiant est sélectionné parmi l'acétylcitrate de tributyle, le n-butyryl-citrate de tri-n-hexyle, l'acétylcitrate de tri-n-octyle et l'acétylcitrate de tri-n-décyle.

6. Système de poches de sang selon la revendication 1, caractérisé en ce que le film a une transmissibilité de O₂ supérieure à 10 µmoles/h et est capable de résister à la déchirure à basses températures à environ -45°C.

7. Système de poches de sang selon l'une quelconque des revendications 1 à 6, caractérisé en ce que le film comprend 3 à 35 % en poids d'huile de soja et/ou d'huile de lin époxydée.

8. Système de poches de sang selon la revendication 6 ou la revendication 7, caractérisé en ce que le film comprend jusqu'à 1 % en poids d'un savon métallique.
